Europäisches Patentamt

European Patent Office

Office européen des brevets

(11) Veröffentlichungsnummer: **0 603 746 B1**

(12) **EUROPÄISCHE PATENTSCHRIFT**

(45) Veröffentlichungstag der Patentschrift: **20.09.95**

(51) Int. Cl.6: **C08F 18/04**, C09D 131/04, C09J 131/04

(21) Anmeldenummer: **93120310.3**

(22) Anmeldetag: **16.12.93**

Die Akte enthält technische Angaben, die nach dem Eingang der Anmeldung eingereicht wurden und die nicht in dieser Patentschrift enthalten sind.

(54) **Biologisch abbaubare, wässrige Dispersionen.**

(30) Priorität: **17.12.92 DE 4242781**

(43) Veröffentlichungstag der Anmeldung:
**29.06.94 Patentblatt 94/26**

(45) Bekanntmachung des Hinweises auf die Patenterteilung:
**20.09.95 Patentblatt 95/38**

(84) Benannte Vertragsstaaten:
**DE ES FR GB IT NL SE**

(56) Entgegenhaltungen:
**GB-A- 768 166**
**GB-A- 854 191**
**GB-A- 901 379**

(73) Patentinhaber: **Wacker-Chemie GmbH**
**Hanns-Seidel-Platz 4**
**D-81737 München (DE)**

(72) Erfinder: **Dr. Eck, Herbert**
**Burg 11**
**D-84489 Burghausen (DE)**
Erfinder: **Dr. Fleischmann, Gerald**
**Carl-Bosch-Strasse 3**
**D-84489 (DE)**
Erfinder: **Dr. Wierer, Konrad**
**Badhöring 7**
**D-84561 Mehring (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft biologisch abbaubare, wäßrige Dispersionen von Vinylesterpolymerisaten, Verfahren zu deren Herstellung sowie deren Verwendung.

Es ist bekannt, daß Polyvinylacetat nur langsam biologisch abgebaut wird (Huang S.J., Biodegradable Polymers in: Encyclopedie of Polymer Sciences, Vol. 2, p. 220-243). M. Buday (C.A. 101(4):24316n) hat gezeigt, daß Polyvinylacetatdispersionen und Butylacrylat-Vinylacetat-Copolymerdispersionen selbst in aktiviertem Schlamm nur relativ langsam abgebaut werden und daß die Abbaugeschwindigkeit von der Größe der Teilchen und deren spezifischen Oberfläche abhängt. Verfilmtes Material, wie es beispielsweise bei der Anwendung von Vinylacetat-Dispersionen im Coating-Bereich entsteht, ist daher wesentlich widerstandsfähiger. Der biologische Abbau eines solchen Materials dauert in der Praxis mehrere Jahre. Die Abbaugeschwindigkeit wird bei vernetzten Produkten entsprechend des Vernetzungsgrades weiter verlangsamt.

Weichmachende Comonomere in Vinylester-Copolymerisaten, beispielsweise Ethylen, Butylacrylat oder 2-Ethylhexylacrylat, welche in Klebemitteln oder Beschichtungsmitteln eingesetzt werden, verzögern den biologischen Abbau noch weiter. Diese Wirkung wird dadurch erklärt, daß diese Comonomere die Hydrolyse der Vinylacetat-Einheiten zu biologisch abbaubaren Vinylalkohol-Einheiten verzögern (Huang S.J., Biodegradable Polymers in: Encyclopedie of Polymer Sciences, Vol. 2, p. 220-243).

Nicht zuletzt wegen des wachsenden Umweltbewußtseins vergrößert sich die Nachfrage nach biologisch gut abbaubaren Kunststoffen rapide. So werden von der Textil- und Papierindustrie biologisch abbaubare, wäßrige, gegebenenfalls vernetzbare Kunststoffdispersionen gefordert, die als Bindemittel in Beschichtungs- und Klebemittelzusammensetzungen einsetzbar sind.

In der WO-A 91/02025 und der EP-A 400532 werden biologisch abbaubare Copolymer-Zusammensetzungen beschrieben, welche Ethylen-Vinylacetat-Copolymer, Stärke und Weichmacher enthalten. Die Herstellung erfolgt durch Vermischen und Co-extrusion der festen Komponenten der Zusammensetzung.

Die GB-A 901379 betrifft mit Polypropylenglykol weichgemachte Vinylesterpolymerisate, wobei der Weichmacher zur Verbesserung der Wasserbeständigkeit der Vinylesterpolymerisat-Massen bereits während der Polymerisation zugegeben wird. Die biologische Abbaubarkeit wird in dieser Schrift nicht behandelt.

In der GB-A 854191 wird empfohlen, zur Herstellung von feinteiligen Polyvinylacetat-Dispersionen diese in Gegenwart von Weichmacher, beispielsweise Dibutylsebazat, zu polymerisieren. Über die Herstellung von biologisch abbaubaren Polyvinylacetat-Dispersionen wird in dieser Schrift nichts ausgesagt.

Der Erfindung lag die Aufgabe zugrunde, wäßrige Dispersionen von Vinylester-Polymerisaten zur Verfügung zu stellen, welche biologisch abbaubar sind und sich für den Einsatz als Beschichtungsmittel und Klebemittel eignen.

Gegenstand der Erfindung ist die Verwendung von wäßrigen Dispersionen von Vinylester-Polymerisaten mit einem Festgehalt von 20 bis 70 Gew%, bezogen auf das Gesamtgewicht der Dispersion, als biologisch abbaubare, wäßrige Dispersionen, herstellbar durch radikalische Polymerisation nach dem Emulsionspolymerisationsverfahren, wobei in Gegenwart von

10 bis 50 Gew%, bezogen auf die Monomerphase, biologisch abbaubarem Weichmacher und

0.5 bis 15.0 Gew%, bezogen auf die Monomerphase, biologisch abbaubarem Emulgator und/oder biologisch abbaubarem Schutzkolloid

eine Monomerphase polymerisiert wird, enthaltend

a) 50 bis 100 Gew.Teile eines oder mehrerer Vinylester aus der Gruppe der Vinylester von unverzweigten oder verzweigten Alkylcarbonsäuren mit 1 bis 15 C-Atomen,

b) 0 bis 30 Gew.Teile Ethylen und/oder Ester der (Meth)acrylsäure oder ethylenisch ungesättigter Dicarbonsäuren von Alkoholen mit 1 bis 10 C-Atomen und

c) 0 bis 20 Gew.Teile weiterer einfach oder mehrfach ethylenisch ungesättigter Verbindungen.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 10 C-Atomen, beispielsweise VeoVa9[R] oder VeoVa10[R].

Bevorzugte Ester der Methacrylsäure, Acrylsäure oder ethylenisch ungesättigter Dicarbonsäuren sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Ester und Halbester der Fumarsäure und/oder Maleinsäure wie Diisopropylfumarat.

Geeignete Comonomere c) sind funktionelle Comonomere wie Acrylamid, Maleinsäuremonoamid, Vinylsulfonat, N-Vinylpyrroliden, N-Vinyllactone. Geeignet sind auch vernetzbare Comonomere wie Vinylacetoacetat oder andere copolymerisierbaren Acetoacetate; copolymerisierbare Alkoxysilanverbindungen wie Vinyltriethoxysilan; copolymerisierbare Epoxidverbindungen wie Vinyl- oder Allylverbindungen des Glycidy-

2

EP 0 603 746 B1

lalkohols; N-Methylolverbindungen wie N-Methylolacrylamid, N-Methylolmethacrylamid, N-Methylolallylcarbamat; N-Alkoxyalkylamide ethylenisch ungesättigter Carbonsäuren wie N-(isobutoxymethyl)-acrylamid. Weiter geeignet sind mehrfach ethylenisch ungesättigte Comonomere wie Divinyl- und Diallylether von Glykolen; Divinyl- und Diallylester von gesättigten DicarPolyvinyl-und Polyallylester von Polycarbonsäuren beispielsweise Diallylphthalat, Diallylmaleat; Di- und Polyester von Di- und Polyhydroxyverbindungen mit (Meth)acrylsäure; Vinyl- und Allylester der (Meth)acrylsäure, Croton-, Malein-, Fumarsäure; Divinylbenzol, Triallylcyanurat.

Vorzugsweise wird nur Vinylacetat, gegebenenfalls mit 0.1 bis 10 Gew.Teilen funktionellen und/oder vernetzbaren Comonomeren c) polymerisiert. Weitere bevorzugte Zusammensetzungen der Monomerphase sind:

75 bis 95 Gew.Teile Vinylacetat, 5 bis 25 Gew.Teile Ethylen und gegebenenfalls 0.1 bis 10 Gew.Teile funktionelle und/oder vernetzbare Comonomere c).

65 bis 95 Gew.Teile Vinylacetat, 5 bis 35 Gew.Teile Vinyllaurat, 1-Methylvinylacetat, Vinylpivalat, VeoVa9 oder VeoVa10 sowie gegebenenfalls 0.1 bis 10 Gew.Teile funktionelle und/oder vernetzbare Comonomere c).

50 bis 70 Gew.Teile Vinylacetat, 5 bis 30 Gew.Teile VeoVa9 oder VeoVa10, 5 bis 25 Gew.Teile Ethylen sowie gegebenenfalls 0.1 bis 10 Gew.Teile funktionelle und/oder vernetzbare Comonomere c).

50 bis 70 Gew.Teile Vinylacetat, 5 bis 25 Gew.Teile Ethylen, 0.5 bis 20 Gew.Teile (Meth)acrylsäureester sowie gegebenenfalls 5 bis 30 Gew.Teile VeoVa9 oder VeoVa10 und/oder 0.1 bis 10 Gew.Teile funktionelle und/oder vernetzbare Comonomere c).

Geeignete biologisch abbaubare Weichmacher sind die Alkylester der $C_4$- bis $C_{12}$-$\alpha,\omega$-Alkandicarbonsäuren, wobei die Alkylreste der Estergruppen 2 bis 18 C-Atome aufweisen können. Als Beispiele seien genannt: Sebazinsäureester wie Dibutylsebazat; Ethylenglykol-, Glycerin- und Sorbitolderivate des Laurats und Zitronensäureester wie Tributylcitrat. Bevorzugt sind polymere Weichmacher wie Adipinsäureethylenglykol-polyester, Polyethylenglykol und Polypropylenglykol mit einem Molekulargewicht von 800 bis 5000, bevorzugt 1500 bis 3000. Besonders bevorzugt sind die ebengenannten polymeren Weichmacher mit Ester-, Amid- oder Urethanendgruppen. Die genannten Weichmacher können auch als Gemische eingesetzt werden.

Als biologisch abbaubare Emulgatoren können sowohl nichtionische Emulgatoren oder Kombinationen von biologisch abbaubaren nichtionischen und anionischen Emulgatoren eingesetzt werden. Bevorzugt sind nichtionische Emulgatoren.

Beispiele für geeignete nichtionische Emulgatoren sind Polyoxyethylen-Kondensationsprodukte wie Polyoxyethylenlaurylether, Polyoxyethylen-oleylether, Polyoxyethylenhydroabietylether. Weitere Beispiele sind Polyoxyethylenester von höheren Fettsäuren wie Polyoxyethylenlaurat, Polyoxyethylenoleat sowie Kondensationsprodukte von Ethylenoxid mit Harzsäuren und Tallöl-Säuren, Polyoxyethylenamide und Aminkondensationsprodukte wie N-Polyethylen-lauramid und N-Lauryl-N-polyoxyethylenamin, Polyoxyethylenthioether wie Polyoxyethylen-n-dodecylthioether, Ethylenoxid-Propylenoxid-Copolymere, Polyglykolether von Fettalkoholen mit Ethylenoxideinheiten. Anstelle der genannten Polyoxyethylenverbindungen können auch die entsprechenden Poly-N-formyl- oder Poly-N-acetylaminoethylene eingesetzt werden.

Zu den nichtionischen Emulgatoren, die erfindungsgemäß verwendet werden können, gehören auch eine Reihe von oberflächenaktiven Mitteln, die als "Pluronics" bekannt sind und die allgemeine Formel haben:

$HO(C_2H_4O)_a(C_3H_6O)_b(C_2H_4O)_cH$, in der a, b, c ganze Zahlen von 1 oder mehr sind. Wenn b zunimmt und a und c im wesentlichen konstant bleiben, dann werden die Verbindungen weniger wasserlöslich und mehr öllöslich und somit mehr hydrophob.

Beispiele für geeignete anionische Emulgatoren sind Alkali- oder Ammoniumsalze von Fettsäuren, Alkylsulfaten und Alkylsulfonsäuren wie die Salze der Laurinsäure, Laurylsulfat oder Laurylsulfonat. Weitere Beispiele sind Sulfobernsteinsäurehalbester von Monofettalkoholen.

Der Konzentrationsbereich für die Gesamtmenge an Emulgatoren liegt im Bereich von 0.5 bis 15 Gew%, bezogen auf die Monomerphase. Es können sowohl einzelne Emulgatoren als auch Kombinationen der genannten Emulgatoren verwendet werden. Werden Kombinationen von Emulgatoren verwendet, dann ist es vorteilhaft, einen relativ hydrophoben Emulgator in Kombination mit einem relativ hydrophilen Emulgator zu verwenden. Ein relativ hydrophober Emulgator ist ein solcher mit einem Trübungspunkt in 1 %-iger wäßriger Lösung unterhalb 88°C und ein relativ hydrophiler Emulgator ist ein solcher mit einem Trübungspunkt in 1 %-iger wäßriger Lösung von 88°C oder höher.

Die erfindungsgemäßen Dispersionen können zur Stabilisierung neben Emulgator noch Schutzkolloide oder auschließlich Schutzkolloide enthalten. Als geeignete, biologisch abbaubare Schutzkolloide seien genannt:

3

Stärken; cyanalkylierte, hydroxyalkylierte und/oder carboxymethylierte Stärken; Dextrine, Gelatine, Casein, ferner Methyl-, Hydroxyethyl-, Hydroxypropyl- und Acetylcellulosen; sowie Polyvinylalkohole, Polyvinylcaprolactam, Polyvinylpyrrolidon und wasserlösliche Copolymere der drei letztgenannten Verbindungsklassen.

Die einsetzbare Menge dieser Schutzkolloide richtet sich nach der Viskosität und der zur Stabilisierung erforderlichen Menge. So reicht zum Beispiel bei Verwendung einer gut stabilisierenden Stärke schon 1 Gew.%, bezogen auf die Monomerphase. Wegen deren hoher Viskosität sind aber maximal 8 Gew%, bezogen auf Monomer, einsetzbar. Von den niedermolekularen Dextrinen lassen sich dagegen bis über 100 Gew%, bezogen auf die Monomerphase, einsetzen. Bei Verwendung der üblichen Polyvinylalkohole sind, sofern keine Emulgatoren zusätzlich verwendet werden, im allgemeinen mehr als 3 Gew%, bezogen auf die Monomerphase, erforderlich.

Das erfindungsgemäße Emulsionspolymerisationsverfahren wird bei 0 bis 100 °C, vorzugsweise bei 35 bis 80 °C, durchgeführt. Bei der Copolymerisation von Ethylen beträgt der bevorzugte Druckbereich bis 100 bar. Wird kein Ethylen copolymerisiert, wird die Polymerisation höchstens beim autogenen Druck der Monomeren bei der jeweiligen Polymerisationstemperatur durchgeführt.

Die Emulsionspolymerisation wird vorzugsweise mit Redoxkatalysatorsystemen durchgeführt. Dabei können das Reduktionsmittel und das Oxidationsmittel gemäß der Reaktion dosiert werden oder man legt das gesamte Oxidationsmittel vor und steuert die Polymerisation durch Dosierung des Reduktionsmittels. Man benötigt 0.01 bis 1.5 Gew%, vorzugsweise 0.03 bis 0.8 Gew%, bezogen auf die Monomerphase, an Oxidationsmittel. Das Reduktionsmittel wird vorzugsweise in einer Menge von 0.01 bis 1.0 Gew%, bezogen auf die Monomerphase, eingesetzt. Beispiele für die oxidierend wirkende Komponente des Katalysators sind Ammonium- oder Kaliumpersulfat, Wasserstoffperoxid, t-Butylhydroperoxid, Peroxodiphosphate wie Kalium-, Natrium-, Ammoniumperoxodiphosphat und Peroxodisulfate wie Ammoniumperoxodisulfat. Beispiele für die Reduktionsmittelkomponente sind Natriumsulfit, Natriumbisulfit, Zink- oder Natriumformaldehydsulfoxylat. Ebenso eignen sich $H_2$/Edelmetallkatalysatoren unter gleichzeitiger Verwendung geringer Mengen von Schwermetallsalzen als Aktivatoren. Geeignete Redoxkatalysatorsysteme sind unter anderem in "Fundamental Principles of Polymerization" G.F. Alelio, J. Wiley and Sons. Inc., New York, 1952 auf den Seiten 333 ff. beschrieben.

Grundsätzlich ist auch die Verwendung von Radikalkatalysatoren, beispielsweise Hydroperoxid, Persulfat oder Peroxodiphosphat in Abwesenheit von Reduktionsmittel möglich. Sowohl bei diesem System als auch bei den vorher genannten ist die Verwendung von Beschleunigern, beispielsweise Spuren von Eisensalzen, möglich.

Die Copolymerisation wird vorzugsweise bei einem pH zwischen 2.5 und 7 durchgeführt. Der pH-Wert kann anfänglich mit kleinen Mengen von Säuren oder Basen eingestellt werden. Auch Puffersubstanzen können, um einen zu starken pH-Abfall während der Polymerisation zu verhindern, zugesetzt werden. Beispiele hierfür sind Natrium- oder Ammoniumcarbonat, Borax, Natriumacetat und Natriumcitrat, sowie Gemische primärer und sekundärer Alkaliphosphate.

Die erfindungsgemäße Emulsionspolymerisation wird vorzugsweise nach einem Dosierverfahren durchgeführt. Dabei werden vorzugsweise 5 bis 30 Gew% der eingesetzten Vinylester a) und der sonstigen Comonomeren, außer den Comonomeren c), vorgelegt und der Rest der Monomerphase zudosiert. Sofern Ethylen copolymerisiert wird, kann es zur Gänze vorgelegt oder teilweise dosiert werden. Vorzugsweise wird der Ethylendruck vor der Polymerisation eingestellt und dann gegebenenfalls durch Nachdrücken von Ethylen über die Polymerisationsdauer konstant gehalten. Natürlich kann der Ethylendruck während der Polymerisationsreaktion auch variiert werden, sofern dies beispielsweise zur Herstellung von Polymerisaten unterschiedlicher Zusammensetzung gewünscht wird.

Die Emulgatoren und gegebenenfalls die Schutzkolloide werden vorgelegt oder ganz oder teilweise dosiert. Vorzugsweise wird mit der Zugabe des zu dosierenden Anteils der Emulgatoren oder Schutzkolloide spätestens dann begonnen, wenn der Festgehalt der Dispersion 35 Gew%, erreicht hat. Der Feststoffgehalt der erfindungsgemäßen Dispersionen kann zwischen 20 und 70 Gew% variiert werden. Auch bei hohem Feststoffgehalt ergibt sich eine vergleichsweise niedere Viskosität der Dispersionen.

Die erfindungsgemäßen biologisch abbaubaren Dispersionen eignen sich als Beschichtungsmittel und Klebemittel beispielsweise für Papier, Textilien, Glasfasern, Holz und Karton.

Die biologische Abbaubarkeit der Dispersionen wird durch den Gehalt an biologisch abbaubarem Weichmacher, Emulgator und gegebenenfalls biologisch abbaubarem Schutzkolloid beschleunigt, da der Abbau durch Mikroorganismen zunächst hauptsächlich an diesen Materialien einsetzt, wodurch die Oberfläche und hierdurch wiederum die Abbaugeschwindigkeit der Vinylesterpolymerisate erhöht wird. Überraschend war der rasche Zerfall der verfilmten und gegebenenfalls vernetzten Proben und das gute Polymerisationsverhalten der Monomer-Weichmacher-Gemische.

Die nachfolgenden Beispiele dienen zur weiteren Erläuterung der Erfindung:

Herstellung der Dispersionen:

Die Dispersionen wurden in einem doppelwandigen 2 l-Reaktionsgefäß mit Ankerrührer hergestellt. Die Monomeren und Hilfsstoffe wurden mittels Feindosiergefäßen zugegeben. Die Katalysatoren (APS/Brüggolit) wurden als 4 %-ige bzw. 2 %-ige Lösungen mit einer Schlauchpumpe eindosiert. Die Temperatur wurde mit Hilfe eines Thermostaten und eines Innentemperaturreglers bei 45°C konstant gehalten.

Die Vorlage war zusammengesetzt aus:

40 g (8 Gew%) des in Tabelle 1 angegebenen Gemisches aus Monomer und Weichmacher

220 g Wasser

0.59 g Aerosol A102 (Sulfobernsteinsäurehalbester von Monofettalkoholen mit 10 bis 12 C-Atomen) als 30 %-ige Lösung

1.07 g Genapol PF40 (Ethylenoxid-Propylenoxid-Copolymerisat) als 97 %-ige Lösung

0.2 g Eisenammonsulfat

Die Vorlage wurde mit Ameisensäure auf pH 3.4 eingestellt.

Zur Vorlage wurden die Dosierungen 1 und 2 zugeführt:

Dosierung 1 (Dosierzeit ca. 6 h):

2.92 g Ammoniumperoxodisulfat in 70 ml Wasser

Dosierung 2 (Dosierzeit ca. 6 h):

1.48 g Brüggolit in 72.5 ml Wasser

Nach Anspringen der Polymerisation wurde mit den Dosierungen 3 und 4 begonnen:

Dosierung 3 (Dosierzeit ca. 3.5 h):

460 g (92 Gew%) des in Tabelle 1 angegebenen Gemisches aus Monomer und Weichmacher mit 3 ml Vanisol-Lösung

Dosierung 4 (Dosierzeit ca. 3.5 h):

6.16 g Acrylsäure

42.5 g N-Methylolacrylamid (48 %-ige wäßrige Lösung)

48.0 g Genapol OX130 (Polyglykolether von Fettalkoholen mit 13 Ethylenoxidgruppen) als 25 %-ige Lösung

24.0 g Wasser

Die so hergestellten Dispersionen wurden bezüglich Festgehalt, Restmonomergehalt, Viskosität, K-Wert und Teilchengröße charakterisiert. Naßrückstand und Dispersionsstabilität wurden beurteilt. Die Ergebnisse sind in Tabelle 1 zusammengefaßt.

Zur Beurteilung der Filmeigenschaften der in den Beispielen hergestellten Dispersionen wurden die Dispersionen in eine Form gegossen und anschließend getrocknet. Es resultierte ein Film mit einer Foliendicke von ca. 1 mm. Die Festigkeit, Klebrigkeit, das Ausschwitzen, Aussehen und die Härte des Films wurden visuell beurteilt. Die Ergebnisse sind in Tabelle 1 zusammengefaßt.

Zur Beurteilung der biologischen Abbaubarkeit wurden mit der obengenannten Methode Folien von 0.2 mm Stärke hergestellt und diese einem Pilztest nach ISO 846 Verfahren B unterzogen. Der Pilzbewuchs und der Lochfraß wurden nach 14 Tagen bestimmt. Die Ergebnisse sind ebenfalls in Tabelle 1 zusammengefaßt.

TABELLE 1:

| Beispiel : | Bsp.1 | Bsp.2 | Bsp.3 | Bsp.4 | Bsp.5 | V.bsp.1 |
|---|---|---|---|---|---|---|
| **Monomer [Gew%]:** | | | | | | |
| Vinylacetat | 60 | 60 | 60 | 77 | 60 | 85 |
| Vinyllaurat | 15 | 15 | 15 | | 15 | 15 |
| **Weichmacher [Gew%]:** | | | | | | |
| Tributylcitrat | 12.5 | | | | | |
| Dibutylsebazat | 12.5 | 12.5 | | | | |
| Ethylenglykoladipinsäure-polyester Desmophen 2020 | | 12.5 | | 23 | | |
| Desmophen 2020 acetyliert | | | | | | |
| Polypropylenglykol 2000 | | | 25 | | | |
| PPG 2000 acetyliert | | | | | 25 | |
| **Analysen:** | | | | | | |
| Festgehalt [%] | 49.9 | 51.0 | 49.2 | 47.1 | 44.2 | 52.0 |
| Restmonomer [%] | 0.8 | 0.6 | 0.3 | 0.3 | 0.8 | 0.4 |
| Viskosität [mPas] | 136 | 380 | 122 | 126 | 50000 | 270 |

TABELLE 1 (Fortsetzung):

| Beispiel: | Bsp.1 | Bsp.2 | Bsp.3 | Bsp.4 | Bsp.5 | V.bsp.1 |
|---|---|---|---|---|---|---|
| K-Wert | 29 | 51 | 38 | 59 | 50 | 76 |
| Teilchengröße [nm] | 307 | 358 | 220 | 491 | 299 | 669 |
| Naßrückstand [g] | 0.1-1.0 | < 0.1 | 0.1-1.0 | 0.1-1.0 | 0.1-1.0 | 0.1-1.0 |
| Dispersionsstabilität | stabil | stabil | stabil | stabil | stabil | stabil |
| Filmeigenschaften: | | | | | | |
| Festigkeit | keine | mittel | keine | mittel | mittel | gut |
| Klebrigkeit | stark | etwas | etwas | keine | etwas | keine |
| Ausschwitzen | keine | keine | keine | keine | keine | keine |
| Aussehen | milchig | milchig | milchig | milchig | milchig | milchig |
| Härte | weich | weich | weich | hart | weich | hart |
| Biologische Abbaubarkeit: | | | | | | |
| Pilzbewuchs | stark | stark | s.stark | stark | stark | keiner |
| Lochfraß | deutlich | deutlich | stark | stark | deutlich | keiner |

## Patentansprüche

1.  Verwendung von wäßrigen Dispersionen von Vinylester-Polymerisaten mit einem Festgehalt von 20 bis 70 Gew%, bezogen auf das Gesamtgewicht der Dispersion, als biologisch abbaubare, wäßrige Dispersionen, herstellbar durch radikalische Polymerisation nach dem Emulsionspolymerisationsverfahren, wobei in Gegenwart von

    10 bis 50 Gew%, bezogen auf die Monomerphase, biologisch abbaubarem Weichmacher und

    0.5 bis 15.0 Gew%, bezogen auf die Monomerphase, biologisch abbaubarem Emulgator und/oder biologisch abbaubarem Schutzkolloid

    eine Monomerphase polymerisiert wird, enthaltend

    a) 50 bis 100 Gew.Teile eines oder mehrerer Vinylester aus der Gruppe der Vinylester von unverzweigten oder verzweigten Alkylcarbonsäuren mit 1 bis 15 C-Atomen,

b) 0 bis 30 Gew.Teile Ethylen und/oder Ester der (Meth)acrylsäure oder ethylenisch ungesättigter Dicarbonsäuren von Alkoholen mit 1 bis 10 C-Atomen und

c) 0 bis 20 Gew.Teile weiterer einfach oder mehrfach ethylenisch ungesättigter Verbindungen.

2. Verwendung nach Anspruch 1, dadurch gekennzeichnet, daß als biologisch abbaubare Weichmacher Alkylester der $C_4$- bis $C_{12}$-$\alpha,\omega$-Alkandicarbonsäuren, deren Alkylreste der Estergruppen 2 bis 18 C-Atome aufweisen, Adipinsäureethylenglykolpolyester, Polyethylenglykol oder Polypropylenglykol mit einem Molekulargewicht von 800 bis 5000 enthalten sind.

3. Verwendung nach Anspruch 1 oder 2, dadurch gekennzeichnet, daß als biologisch abbaubare Emulgatoren Polyoxyethylen-Kondensationsprodukte, Polyoxyethylenester von höheren Fettsäuren, Polyoxyethylenamide, Polyoxyethylenthioether, Ethylenoxid-Propylenoxid-Copolymere oder Polyglykolether von Fettalkoholen mit Ethylenoxideinheiten enthalten sind.

4. Verwendung nach Anspruch 1 bis 3, dadurch gekennzeichnet, daß als biologisch abbaubare Schutzkolloide Stärke, cyanalkylierte, hydroxyalkylierte und/oder carboxymethylierte Stärke, Dextrin, Gelatine, Casein, Methyl-, Hydroxyethyl-, Hydroxypropyl-und Acetylcellulosen, Polyvinylalkohole, Polyvinylcaprolactam oder Polyvinylpyrrolidon enthalten sind.

5. Verwendung nach Anspruch 1 bis 4, dadurch gekennzeichnet, daß die Comonomerphase zusammengesetzt ist aus Vinylacetat, gegebenenfalls mit 0.1 bis 10 Gew.Teilen funktionellen und/oder vernetzbaren Comonomeren c), oder
75 bis 95 Gew.Teile Vinylacetat, 5 bis 25 Gew.Teile Ethylen und gegebenenfalls 0.1 bis 10 Gew.Teile funktionellen und/oder vernetzbaren Comonomere c) oder 65 bis 95 Gew.Teile Vinylacetat, 5 bis 35 Gew.Teile Vinyllaurat, 1-Methylvinylacetat, Vinylpivalat, VeoVa9 oder VeoVa10 sowie gegebenenfalls 0.1 bis 10 Gew.Teile funktionellen und/oder vernetzbaren Comonomere c) oder 50 bis 70 Gew.Teile Vinylacetat, 5 bis 30 Gew.Teile VeoVa9 oder VeoVa10, 5 bis 25 Gew.Teile Ethylen sowie gegebenenfalls 0.1 bis 10 Gew.Teile funktionellen und/oder vernetzbaren Comonomere c) oder
50 bis 70 Gew.Teile Vinylacetat, 5 bis 25 Gew.Teile Ethylen, 0.5 bis 20 Gew.Teile (Meth)acrylsäureester sowie gegebenenfalls 5 bis 30 Gew.Teile VeoVa9 oder VeoVa10 und/oder 0.1 bis 10 Gew.Teile funktionellen und/oder vernetzbaren Comonomere c).

6. Verwendung nach Anspruch 1 bis 5, dadurch gekennzeichnet, daß die Emulsionspolymerisation bei 0 bis 100°C in Gegenwart eines Redoxkatalysatorsystems durchgeführt wird, wobei 5 bis 30 Gew% der eingesetzten Vinylester a) und der sonstigen Comonomere, außer den Comonomeren c) vorgelegt und der Rest dosiert wird und die Emulgatoren und/oder Schutzkolloide vorgelegt oder ganz oder teilweise dosiert werden.

7. Verwendung der biologisch abbaubaren, wäßrigen Dispersionen nach Anspruch 1 bis 6 als Beschichtungs- und Klebemittel.

**Claims**

1. Use of aqueous dispersions of vinyl ester polymers having a solids content of 20 to 70% by weight, based on the total weight of the dispersion, as biologically degradable aqueous dispersions, which can be prepared by free radical polymerization by the emulsion polymerization process, wherein, in the presence of
10 to 50% by weight, based on the monomer phase, of biologically degradable plasticizer and
0.5 to 15.0% by weight, based on the monomer phase, of biologically degradable emulsifier and/or biologically degradable protective colloid,
a monomer phase comprising
a) 50 to 100 parts by weight of one or more vinyl esters from the group comprising vinyl esters of unbranched or branched alkylcarboxylic acids having 1 to 15 C atoms,
b) 0 to 30 parts by weight of ethylene and/or ester of (meth)acrylic acid or ethylenically unsaturated dicarboxylic acids from alcohols having 1 to 10 C atoms and
c) 0 to 20 parts by weight of other mono- or polyethylenically unsaturated compounds
is polymerized.

2. Use according to Claim 1, characterized in that alkyl esters of $C_4$- to $C_{12}$-$\alpha,\omega$-alkanedicarboxylic acids, in which the alkyl radicals of the ester groups contain 2 to 18 C atoms, adipic acid ethylene glycol polyester, polyethylene glycol or polypropylene glycol having a molecular weight of 800 to 5000 are present as biologically degradable plasticizers.

3. Use according to Claim 1 or 2, characterized in that polyoxyethylene condensation products, polyoxyethylene esters of higher fatty acids, polyoxyethylene amides, polyoxyethylene thioethers, ethylene oxide/propylene oxide copolymers or polyglycol ethers of fatty alcohols with ethylene oxide units are present as biologically degradable emulsifiers.

4. Use according to any one of Claims 1 to 3, characterized in that starch, cyanoalkylated, hydroxyalkylated and/or carboxymethylated starch, dextrin, gelatin, casein, methyl-, hydroxyethyl-, hydroxypropyl-and acetylcelluloses, polyvinyl alcohols, polyvinylcaprolactam or polyvinylpyrrolidone are present as biologically degradable protective colloids.

5. Use according to any one of Claims 1 to 4, characterized in that the comonomer phase is composed of vinyl acetate, if appropriate with 0.1 to 10 parts by weight of functional and/or crosslinkable comonomers c), or
75 to 95 parts by weight of vinyl acetate, 5 to 25 parts by weight of ethylene and, if appropriate, 0.1 to 10 parts by weight of functional and/or crosslinkable comonomers c) or
65 to 95 parts by weight of vinyl acetate, 5 to 35 parts by weight of vinyl laurate, 1-methylvinyl acetate, vinyl pivalate, VeoVa9 or VeoVa10 and, if appropriate, 0.1 to 10 parts by weight of functional and/or crosslinkable comonomers c) or
50 to 70 parts by weight of vinyl acetate, 5 to 30 parts by weight of VeoVa9 or VeoVa10, 5 to 25 parts by weight of ethylene and, if appropriate, 0.1 to 10 parts by weight of functional and/or crosslinkable comonomers c) or
50 to 70 parts by weight of vinyl acetate, 5 to 25 parts by weight of ethylene, 0.5 to 20 parts by weight of (meth)acrylic acid ester and, if appropriate, 5 to 30 parts by weight of VeoVa9 or VeoVa10 and/or 0.1 to 10 parts by weight of functional and/or crosslinkable comonomers c).

6. Use according to any one of Claims 1 to 5, characterized in that the emulsion polymerization is carried out at 0 to 100 °C in the presence of a redox catalyst system, wherein 5 to 30% by weight of the vinyl esters a) employed and the other comonomers, apart from the comonomers c), are initially introduced into the reaction vessel and the remainder is metered in and the emulsifiers and/or protective colloids are initially introduced into the reaction vessel or are metered in completely or in part.

7. Use of the biologically degradable aqueous dispersions according to any one of Claims 1 to 6 as coating agents or adhesives.

**Revendications**

1. Utilisation de dispersions aqueuses de polymérisats d'esters vinyliques ayant une teneur en matières solides comprise entre 20 et 70% en poids, rapportée au poids total de la dispersion, en tant que dispersions aqueuses biodégradables, qui peuvent être préparées par polymérisation radicalaire selon le procédé de polymérisation en émulsion, une phase monomère étant polymérisée en présence de
10 à 50% en poids, rapporté à la phase monomère, de plastifiant biodégradable et
0,5 à 15,0% en poids, rapporté à la phase monomère, d'un émulsionnant biodégradable et/ou d'un colloïde protecteur biodégradable,
ladite phase contenant
    a) 50 à 100 parties en poids d'un ou de plusieurs esters vinyliques du groupe des esters vinyliques des acides alkylcarboxyliques non ramifiés ou ramifiés ayant de 1 à 15 atomes de carbone,
    b) 0 à 30 parties en poids d'éthylène et/ou d'esters de l'acide (méth)acrylique ou de diacides carboxyliques à insaturation éthylénique et d'alcools ayant de 1 à 10 atomes de carbone et
    c) 0 à 20 parties en poids d'autres composés ayant une ou plusieurs insaturations éthyléniques.

2. Utilisation selon la revendication 1, caractérisée en ce qui concerne les plastifiants biodégradables on utilisera les esters d'alkyles d'acides $\alpha,\omega$-alcanedicarboxyliques en $C_4$ à $C_{12}$, dont les restes alkyle des groupes ester peuvent posséder de 2 à 18 atomes de carbone, le polyester éthylèneglycol-acide adipique, les polyéthylèneglycols ou les polypropylèneglycols ayant un poids moléculaire compris entre 800 et 5000.

3. Utilisation selon la revendication 1 ou 2, caractérisée en ce qu'en tant que émulsionnants biodégradables, sont compris des produits de condensation de polyoxyéthylène, des polyoxyéthylène esters d'acide gras supérieurs, des polyoxyéthylène amides, des polyoxyéthylènethioéthers, des copolymères oxyde d'éthylèneoxyde de propylène ou des polyglycoléthers d'alcools gras ayant des unités d'oxyde d'éthylène.

4. Utilisation selon les revendications 1 à 3, caractérisée en ce qu'en tant que colloïdes protecteurs biodégradables, sont compris l'amidon, l'amidon cyanalalkylé, hydroxyalkylé, et/ou carboxyméthylé, la dextrine, la gélatine, le caséïne, les méthyl-, hydroxyéthyl-, hydroxypropyl- et acétylcelluloses, des alcools polyvinyliques, des polyvinylcaprolactames ou des polyvinylpyrrolidones

5. Utilisation selon les revendications 1 à 4, caractérisée en ce que la phase comonomère est composée d'acétate de vinyle, éventuellement avec 0,1 à 10 parties en poids de comonomères c) fonctionalisés et/ou réticulables ou 75 à 95 parties en poids d'acétate de vinyle, 5 à 25 parties en poids d'éthylène et éventuellement 0,1 à 10 parties en poids de comonomères c) fonctionalisés et/ou réticulables ou 65 à 95 parties en poids d'acétate de vinyle, 5 à 35 parties en poids de laurate de vinyle, d'acétate de 1-méthylvinyle, de pivalate de vinyle, de VeoVa9 ou de VeoVa10 ainsi qu'éventuellement 0,1 à 10 parties en poids de comonomères c) fonctionalisés et/ou réticulables ou
50 à 70 parties en poids d'acétate de vinyle, 5 à 30 parties en poids de VeoVa9 ou VeoVa10, 5 à 25 parties en poids d'éthylène ainsi qu'éventuellement 0,1 à 10 parties en poids de comonomères c) fonctionalisés et/ou réticulables ou
50 à 70 parties en poids d'acétate de vinyle, 5 à 25 parties en poids d'éthylène, 0,5 à 20 parties en poids d'esters (méth)acryliques ainsi qu'éventuellement 5 à 30 parties en poids de VeoVa9 ou VeoVa10 et/ou 0,1 à 10 parties en poids de comonomères c) fonctionalisés et/ou réticulables.

6. Utilisation selon les revendications 1 à 5, caractérisée en ce que la polymérisation en émulsion est réalisée à une température comprise entre 0 et 100°C en présence d'un système de catalyseur rédox, en plaçant préalablement 5 à 30% en poids de l'ester de vinyle a) utilisé et des autres comonomères, en dehors des comonomères c) et en introduisant progressivement le reste et en plaçant prélablement les émulsionnants et/ou les colloïdes protecteurs ou en les introduisant progressivement en une fois ou par portions.

7. Utilisation de dispersions aqueuses biodégradables selon les revendications 1 à 6 en tant qu'agent d'enduction et en tant qu'agent adhésif.